# DEMANDE DE BREVET EUROPEEN

(11) **EP 2 017 804 A1**
(43) Date de publication de la demande: **21.01.2009**
(21) Numéro de dépôt: 08160402.7
(22) Date de dépôt: 15.07.2008
(51) Int. Cl.: G08C 17/02

(54) **Procédé de fonctionnement d'un émetteur d'ordres dans une installation domotique et émetteur d'ordres pour sa mise en oeuvre**

(30) Priorité: 17.07.2007 FR 0705161
(71) Demandeur: Somfy SAS, 74300 Cluses (FR)
(72) Inventeur: Dunand, Raphaël, 74800 La Roche-sur-Foron (FR); Faure, David, 74800 La Roche-sur-Foron (FR); Froidure, Cyrille, 74800 La Roche-sur-Foron (FR); Poulet, Olivier, 74250 Fillinges (FR)
(74) Mandataire: Bugnion Genève

(57) **Abrégé**

Procédé de fonctionnement d'un émetteur d'ordres (1) destiné à commander un actionneur (21) de manoeuvre motorisée d'un écran domotique (22), un ordre étant émis sur requête d'un utilisateur par action sur une touche (T) de l'émetteur d'ordres associée à cet ordre et émis selon au moins un premier ou un deuxième protocole de communication suivant une configuration de cette touche, caractérisé en ce qu'un indicateur de l'émetteur d'ordres indique la configuration de la touche de l'émetteur d'ordres selon le premier ou le deuxième protocole de communication.

## Description

L'invention concerne un émetteur d'ordres dans un ensemble domotique comprenant des actionneurs pour la manoeuvre motorisée d'écrans ou d'ouvrants tels que des volets roulants, des fenêtres, des portes, des écrans de protection solaire ou de projection.

De tels émetteurs d'ordres traduisent une action d'un utilisateur sur une interface de commande comprenant par exemple des boutons ou des touches, en un ordre de mouvement et transmettent cet ordre à un actionneur. L'ordre est contenu dans une information envoyée par l'émetteur. La transmission d'informations peut se faire par voie filaire ou sans fil, notamment par ondes radiofréquences. L'ensemble des caractéristiques de cette transmission d'informations fait partie d'un protocole de communication qui détermine comment communiquer pour se faire comprendre d'un autre objet de l'ensemble domotique.

Le terme « objet » est utilisé dans cette demande pour désigner indifféremment ou selon le contexte un émetteur d'ordres ou un récepteur d'ordres.

Le protocole de communication définit également entre autres la fréquence radio de transmission d'informations et la construction des trames constituant les signaux d'information.

Au cours du temps, de nouveaux protocoles sont élaborés, qui permettent de communiquer mieux, plus précisément et d'inclure plus de fonctionnalités de commande ou d'information à l'égard de l'utilisateur. Selon la définition d'un nouveau protocole, les nouveaux produits, fonctionnant avec ce nouveau protocole, restent ou non compatibles avec les anciens produits.

Certains produits sont disponibles sur le marché, pour lesquels il est possible de sélectionner un protocole ou un autre mais sans qu'il n'y ait de retour d'information vis-à-vis du protocole actif autre que le bon ou mauvais fonctionnement de l'émetteur d'ordres dans l'installation considérée.

Dans ce cas, aucune information visible ne traduit alors quel est le protocole actif correspondant à l'émetteur ou à une touche de l'émetteur.

Alternativement, l'émetteur d'ordres comprend un sélecteur de protocole de communication, la position du sélecteur indique alors le protocole actif. Cependant, dans ce cas, une interface suffisamment élaborée est nécessaire pour répondre à la fois à un besoin de saisie et un retour visuel. Or, la fonction de sélection de protocole est une fonction rarement utilisée et on cherche généralement à la réaliser au moindre coût en limitant les moyens matériels supplémentaires. De plus, cette solution est difficilement applicable lorsque différentes touches d'un émetteur peuvent chacune être configurées avec un protocole propre. Il serait alors nécessaire de multiplier ces interfaces visuelles et de saisie.

On connaît de la demande EP 1 756 786 un émetteur portable capable d'émettre des signaux de communication selon deux protocoles, un protocole dit « unidirectionnel » pour gérer les communications de manière unidirectionnelle et un protocole dit « bidirectionnel » pour gérer les communications de manière bidirectionnelle. La sélection d'un protocole se fait de manière automatique : l'émetteur envoie dans un premier temps une trame de communication selon chaque protocole. S'il reçoit une réponse à ce signal, indiquant le fait que l'objet avec lequel il communique est capable de recevoir des signaux selon le protocole bidirectionnel, il bascule automatiquement vers ce protocole. Les messages ultérieurs vers cet objet se feront selon le protocole bidirectionnel. Un affichage approprié est alors mis en place sur un écran tactile qui s'auto-configure en fonction du protocole sélectionné. Ces moyens d'affichage doivent être élaborés pour permettre également la saisie des ordres de commande de l'équipement.

La distinction automatique décrite n'est pas toujours applicable, par exemple pour distinguer deux protocoles unidirectionnels différents.

D'autre part, on connaît du brevet US 6,832,076 un récepteur d'ordres pouvant communiquer avec plusieurs émetteurs d'ordres selon des protocoles différents. Un retour d'information auditif, par des séries de bips sonores de fréquence ou longueur variable, est alors émis par le récepteur d'ordres pour signaler selon quel type de protocole le message reçu a été élaboré et transmis et donc selon quel protocole fonctionne l'émetteur d'ordres venant d'être utilisé. Un autre type de signal est émis lorsqu'un signal est mal reçu. L'ensemble de ces retours d'information aide un installateur à formuler un diagnostic si nécessaire.

Cependant, ce retour d'information est établi au niveau du récepteur d'ordres et non au niveau de l'émetteur. Il est difficilement reproductible dans un atelier de service après-vente par exemple, lorsqu'un technicien chargé de diagnostiquer un problème d'un émetteur d'ordres ne possède que cet émetteur d'ordres.

Le but de l'invention est de fournir un procédé de fonctionnement d'un émetteur d'ordres palliant les problèmes identifiés précédemment et améliorant les procédés de fonctionnement connus de l'art antérieur. En particulier, l'invention propose un procédé de fonctionnement pouvant être mis en oeuvre par un émetteur d'ordre ayant une structure très simple, notamment des moyens de saisie et d'affichage très simples tout en fournissant des outils d'aide à la maintenance. L'invention concerne aussi un émetteur d'ordres pour la mise en oeuvre d'un tel procédé de fonctionnement.

Le procédé selon l'invention est défini par la revendication 1.

Différents modes d'exécution sont définis par les revendications dépendantes 2 à 11.

Un émetteur d'ordres selon l'invention est défini par la revendication 12.

Le dessin annexé représente, à titre d'exemples, un mode de réalisation d'un émetteur d'ordres selon l'invention et deux modes d'exécution du procédé de fonctionnement selon l'invention.

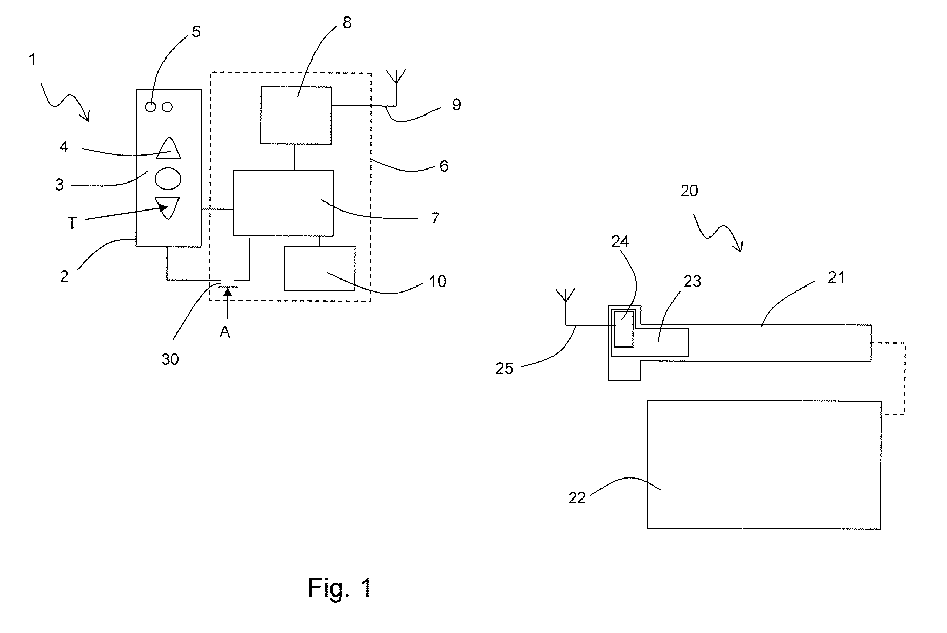

La figure 1 est un schéma d'un émetteur d'ordres selon l'invention.
Les figures 2a et 2b sont des chronogrammes décrivant le principe des procédés de fonctionnement des émetteurs d'ordres connus de l'art antérieur.
Les figures 3a, 3b, 4a et 4b représentent des chronogrammes décrivant le principe d'un premier mode d'exécution du procédé de fonctionnement selon l'invention.
Les figures 5a, 5b, 6a et 6b représentent des chronogrammes décrivant le principe d'un deuxième mode d'exécution du procédé de fonctionnement selon l'invention.
La figure 7 représente des chronogrammes décrivant différentes formes de retour d'information.

Un émetteur d'ordres 1 comprend un boîtier 2 muni d'une interface utilisateur 3 comprenant par exemple des touches de saisie 4 et une interface d'affichage 5, pouvant se composer d'une simple LED. A l'intérieur de ce boîtier 2 se trouve une unité électronique 6. L'unité électronique 6 comprend notamment un microprocesseur 7. Les touches de saisie 4 sont connectées à des entrées du microprocesseur 7. Un module 8 d'émission de signaux électromagnétiques permettant de transmettre des ordres est également lié à une sortie de microprocesseur 7. Le module est par exemple un module d'émission d'ondes radio et est muni d'une antenne 9. Alternativement, il peut s'agir d'un module d'émission infrarouge. L'unité électronique est alimentée par une pile ou batterie 10.

Le microprocesseur comprend aussi des moyens logiciels pour régir le fonctionnement de l'émetteur d'ordres selon l'invention. Ces moyens logiciels comprennent par exemple des programmes.

L'émetteur d'ordres est destiné à être utilisé avec un équipement domotique 20 comprenant au moins un actionneur 21 d'un écran 22 de type volet roulant, store ou porte, fenêtre, porte de garage ou portail. Il peut être utilisé, plus généralement dans un système domotique pour le pilotage à distance d'un équipement domotique.

Pour cela, l'équipement domotique est équipé d'un ensemble électronique 23 muni d'un module de réception de signaux électromagnétiques 24. Par exemple, il peut s'agir d'un module de réception d'ondes radio relié à une antenne 25. Le module de réception fonctionne selon un même protocole de communication que l'émetteur d'ordres 1.

En fonction de leur date de fabrication, il est possible que les émetteurs d'ordres et les appareils domotiques soient capables de recevoir ou d'émettre des signaux suivant un premier protocole, un deuxième protocole ou les deux protocoles. Alternativement, un protocole de communication peut être associé non pas à l'émetteur d'ordres dans son ensemble, mais à une touche ou certaines touches de cet émetteur.

Pour des raisons de compatibilité avec les anciens produits installés, il est courant de prévoir une compatibilité descendante, c'est-à-dire que les nouveaux produits sont capables de dialoguer avec les anciens.

Une façon simple de réaliser cette compatibilité descendante est de prévoir que les nouvelles gammes d'émetteurs peuvent être configurées selon l'un ou l'autre des protocoles au moins de manière manuelle.

A cet effet, l'émetteur d'ordres 1 comprend un moyen de sélection de protocole 30, c'est-à-dire un moyen de configuration de la ou des touches. En effet, ce moyen permet de configurer la ou les touches de manière à ce que l'émetteur d'ordres fonctionne selon un premier protocole lors d'actions sur une ou plusieurs touches ou selon un deuxième protocole lors d'actions sur une ou plusieurs touches. Ce moyen de sélection comprend un contact 30. Le contact est situé dans l'unité électronique 6. Il est relié au microprocesseur 7. Ce contact 30 est disposé de manière à ne pas être actionné par inadvertance. Il peut être placé sous un couvercle amovible, par exemple un couvercle d'accès aux piles (non représenté). Lors de chaque appui sur ce contact 30, un indicateur de protocole actif bascule d'un état à un autre. Chaque appui sur le contact provoque le basculement de fonctionnement de l'émetteur d'ordres d'un mode dans lequel il émet des signaux selon un premier protocole à un mode dans lequel il émet des signaux selon un autre protocole. En revanche, l'utilisateur ne peut savoir, à la vue du simple contact, selon quel protocole l'émetteur émet des signaux.

Ce contact peut éventuellement être commun à d'autres fonctions, par exemple une mise en mode de programmation voire même à des touches de saisie 4, la différenciation entre la fonction de réglage et/ou d'indication de protocole actif et les autres fonctions portant sur les durées ou séquences d'appuis.

Alternativement, le basculement d'un protocole à un autre pourrait être effectif à chaque nouvelle mise en place des piles.

Dans tous ces cas, l'information de protocole actif n'est pas traduite par une information visible au niveau du moyen de sélection de protocole.

Lors d'un appui sur une des touches de saisie de l'émetteur d'ordres, l'unité électronique traduit cet appui en un signal qui est émis par le module d'émission radio. Lorsque l'appareil domotique reçoit ce signal, il le déchiffre et, s'il lui est destiné, traduit ce signal en une action ou une commande de l'appareil.

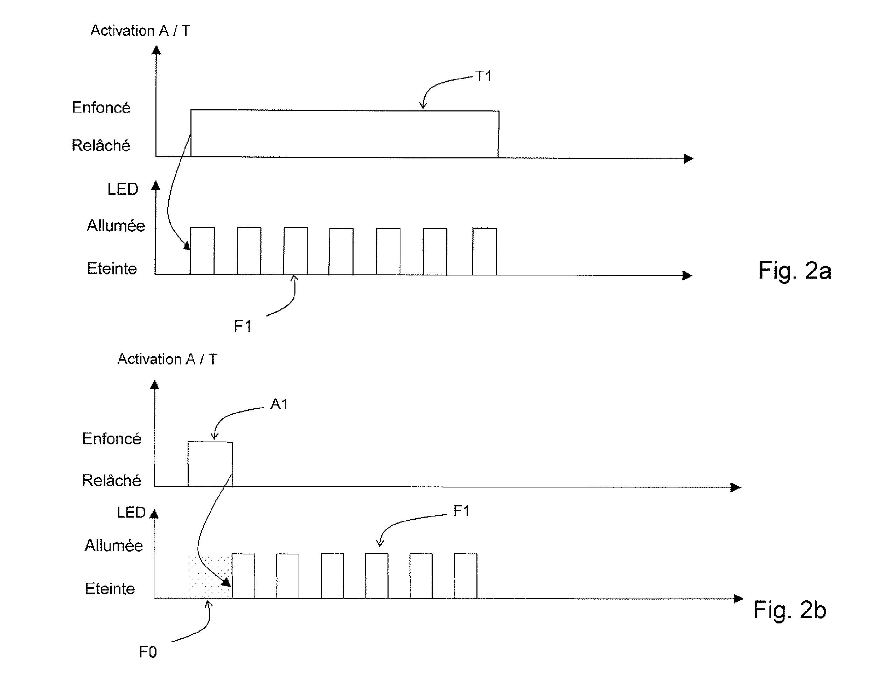

La figure 2a illustre le fonctionnement des produits de l'art antérieur lors de l'appui T sur une touche de saisie. Cet appui s'accompagne, dès le début de l'appui, d'un retour d'information visuel tel qu'un clignotement rapide F1 de la diode électroluminescente de l'interface d'affichage 5. Ce clignotement dure pendant une période prédéterminée ou préférentiellement le temps d'appui de la touche de saisie.

Pour que l'ordre émis par l'émetteur soit compris et exécuté par l'équipement, il est nécessaire ou du moins souhaitable, que l'émetteur d'ordres et l'équipement domotique ou l'ensemble électronique de l'équipement soient au préalable appairés, c'est-à-dire qu'ils échangent au moins un identifiant caractéristique de leur relation. Cet identifiant est enregistré, lors d'une procédure d'appairage, au niveau de l'un et/ou l'autre des objets communicants.

De plus, il est nécessaire que ces deux objets communicants puissent dialoguer en utilisant le même protocole. Celui-ci peut être lié à l'émetteur ou être configurable, comme décrit ci-dessous.

La figure 2b illustre le fonctionnement de l'art antérieur lors de la configuration du protocole actif. Lors d'une activation A1 d'une touche de configuration de protocole, aucun retour d'information F0 n'est proposé. Suite au relâchement de la touche, un retour d'information F1 sous forme d'un clignotement rapide indique à l'utilisateur que son émetteur est en mode de changement de protocole. Ce clignotement F1 stoppe au bout d'un temps prédéterminé, l'émetteur est alors configuré. En revanche, en dehors du fait que le protocole actif a basculé du protocole précédent vers un nouveau protocole, l'utilisateur n'a pas d'indication sur le protocole ainsi choisi. Seuls des tests sur site avec différents équipements dont le protocole est connu peuvent éventuellement permettre de déterminer le protocole actif.

L'émetteur d'ordres selon l'invention permet un retour d'information sur le protocole actif, uniquement à partir des interfaces existantes.

La nature du retour d'information est caractéristique du protocole. Par exemple, un clignotement rapide ou lent d'une diode électroluminescente signale un premier ou un deuxième protocole. Alternativement, un clignotement et une absence de signal signalent un premier ou un deuxième protocole. D'autres formes de retours d'information peuvent évidemment être prévues sans sortir du cadre de l'invention.

Selon un premier mode de réalisation, le moyen de sélection du protocole est utilisé pour traduire la requête de l'utilisateur de demande d'information sur la configuration de protocole.

Dans ce premier mode de réalisation, deux options sont réalisables.

La première consiste à émettre un signal de retour d'information lors d'une action particulière utilisant le moyen de sélection de protocole, toujours sans moyens matériels supplémentaires, cette action particulière étant différenciée par rapport à l'action de changement de protocole et aux autres fonctions éventuellement disponibles à partir de ce même moyen. Par exemple, un appui court, inférieur à 2 secondes, provoque le basculement de protocole. Un appui t plus long, par exemple supérieur à 2 secondes, voire supérieur à 3 secondes, provoque l'apparition du signal d'information, sans qu'il y ait changement de protocole.

La deuxième option consiste à émettre le signal de retour d'information indiquant le protocole lors du basculement de protocole. Dans ce cas, le signal visuel émis à la suite du changement de protocole est représentatif du protocole dans lequel vient d'être configuré l'émetteur. Par extension, le protocole utilisé avant ce basculement est l'autre protocole. S'il existe plus de deux protocoles, ceux-ci peuvent être configurés successivement auquel cas il est possible de connaître les états précédents de l'émetteur.

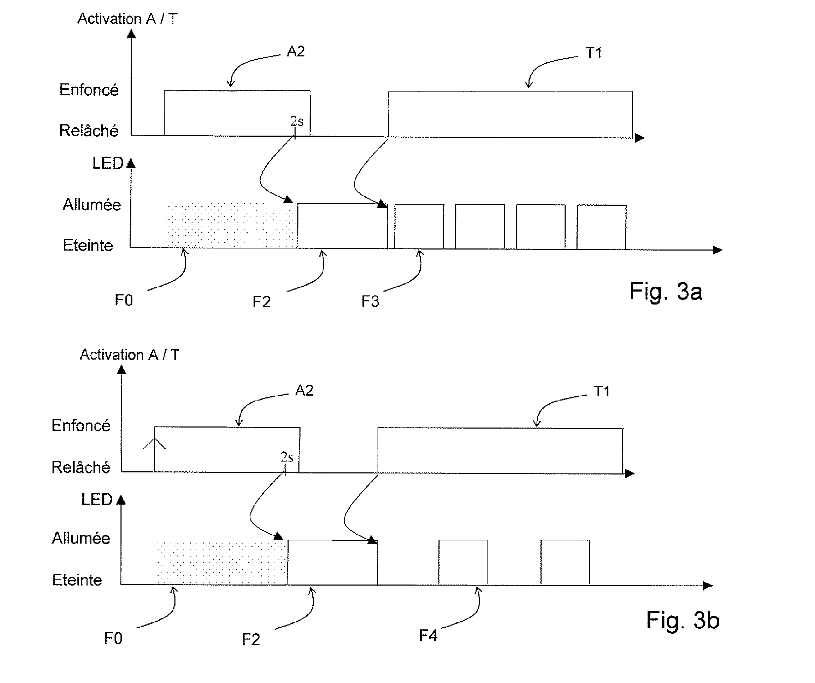

Les figures 3a et 3b illustrent la première option du premier mode de réalisation dans lequel le contact 30 est utilisé à la fois pour provoquer un changement de protocole et un retour d'information. On distingue également sur ces figures une requête d'information par touche de saisie T. Cette fonction est particulièrement utile dans le cas où chaque touche de saisie commande un équipement domotique distinct (par exemple par des appuis successifs commandant des changements d'état ON/OFF ou MONTEE-STOP-DESCENTE) et donc l'émetteur d'ordres peut dialoguer avec différents équipements selon différents protocole.

Dans le cas illustré à la figure 2b, le changement de protocole est réalisé lors du relâchement du contact 30. Si l'appui sur ce contact 30 est cependant maintenu sur une durée plus longue, par exemple supérieure à 2 secondes, l'unité électronique en déduit qu'il s'agit non pas d'une requête de changement de protocole mais d'une requête d'information. Aucun retour d'information F0 n'a donc lieu pendant les 2 premières secondes. A l'issue de ces deux secondes, la diode électroluminescente est allumée en continu selon un format F2 pendant une durée prédéterminée ou jusqu'à un nouvel appui sur une des touches de saisie T1 dont on veut connaître le protocole associé.

Un premier format F3 de retour d'information, sous forme d'un clignotement rapide de la diode électroluminescente, légèrement différent du clignotement F1 décrit précédemment est produit pour signifier qu'un premier protocole est associé à la touche, pendant toute la durée d'appui sur la touche de saisie T1. Lorsque cette touche T1 est relâchée, le clignotement rapide F3 cesse (figure 3a).

Un deuxième format F4 de retour d'information, sous forme d'un clignotement lent de la diode électroluminescente, différent des clignotements F1 et F3 décrits précédemment est produit pour signifier qu'un deuxième protocole est associé à la touche, pendant toute la durée d'appui sur la touche de saisie T1. Lorsque cette touche T1 est relâchée, le clignotement lent F4 cesse (figure 3b).

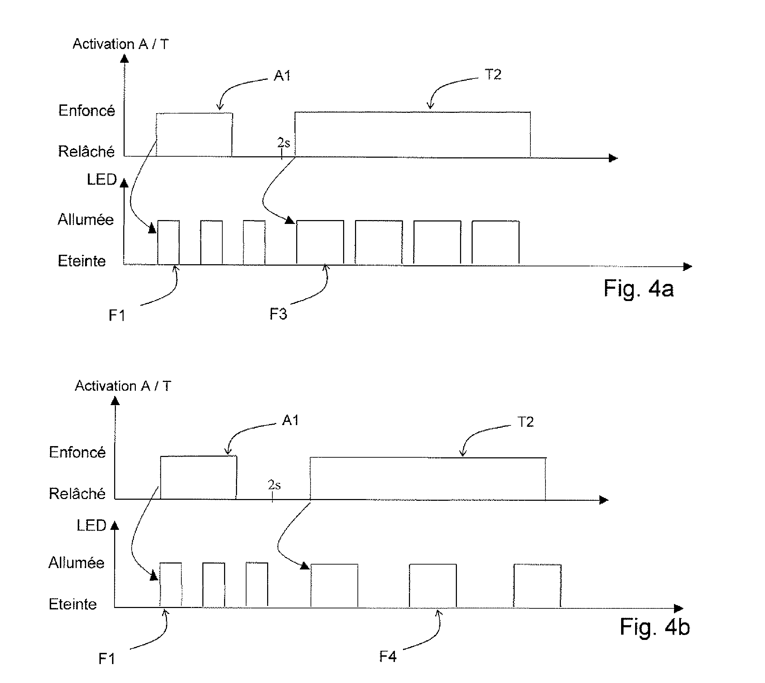

Les figures 4a et 4b illustrent la deuxième option du premier mode de réalisation dans lequel le contact 30 est utilisé à la fois pour provoquer un changement de protocole et un retour d'information. On distingue également sur ces figures une requête d'information par touche de saisie.

Cette option se distingue de la précédente en ce que les durées d'activation du contact 30 ne sont pas gérées, autrement dit, chaque activation, quelle que soit sa durée, modifie le protocole actif, mais permet également un retour d'information caractérisant le nouveau protocole actif.

Ainsi, pour obtenir une indication sur le protocole actif, il faut faire basculer celui-ci. La manoeuvre étant simple, elle ne pose pas de problème et peut être exécutée une seconde fois s'il est nécessaire d'associer de nouveau l'émetteur ou une touche de l'émetteur au protocole précédent.

Dans le cas illustré à la figure 2b, le changement de protocole est réalisé lors du relâchement du contact. Au contraire dans ce mode de réalisation, un retour d'information de format F1 (équivalent ou différent du format F1 de l'art antérieur) a lieu dès le début de l'activation du contact 30 et pendant une durée prédéterminée pouvant être égale à 2 secondes. Suite à un appui sur une des touches de saisie T2 dont on veut connaître le protocole associé, la diode électroluminescente se met à clignoter selon un nouveau format F3 ou F4 différent du précédent F1. Ce clignotement dure pendant une durée prédéterminée ou tout au long de l'appui sur la touche T2.

Un premier format F3 de retour d'information, sous forme d'un clignotement rapide de la diode électroluminescente, légèrement différent du clignotement F1 décrit précédemment est produit pour signifier qu'un premier protocole est associé à la touche (figure 4a).

Un deuxième format F4 de retour d'information, sous forme d'un clignotement lent de la diode électroluminescente, différent des clignotements F1 et F3 décrits précédemment est produit pour signifier qu'un deuxième protocole est associé à la touche (figure 4b).

Si le protocole actif ne correspond pas au protocole souhaité lors de la configuration de l'émetteur, il suffit de répéter la manoeuvre pour basculer vers le nouveau protocole. Lors d'une maintenance, le technicien devra noter que le protocole actif sur site était équivalent non pas au protocole dont il a le retour d'information suite à la manoeuvre effectuée, mais au précédent.

Un avantage particulier lié à cette option de réalisation est l'indépendance vis-à-vis du moyen de changement de protocole. En effet, elle est applicable avec d'autres moyens, comme par exemple le basculement de protocole à chaque changement de piles.

Selon un deuxième mode de réalisation, les touches de saisies existantes sont utilisées pour traduire la requête de l'utilisateur de demande d'information sur la configuration de protocole.

Selon une première option de ce deuxième mode de réalisation, s'il existe un retour d'information lié à l'activation d'une touche de saisie, celui-ci est conservé pendant l'activation de cette touche. En revanche, un nouveau retour d'information est prévu par la suite, soit lorsque l'activation est maintenue plus longtemps qu'une durée prédéterminée, soit pendant un délai prédéterminé après le relâchement de la touche.

Selon une deuxième option de ce deuxième mode de réalisation, s'il existe un retour d'information lié à l'activation d'une touche de saisie, celui-ci est modifié pour y intégrer une information relative au protocole actif.

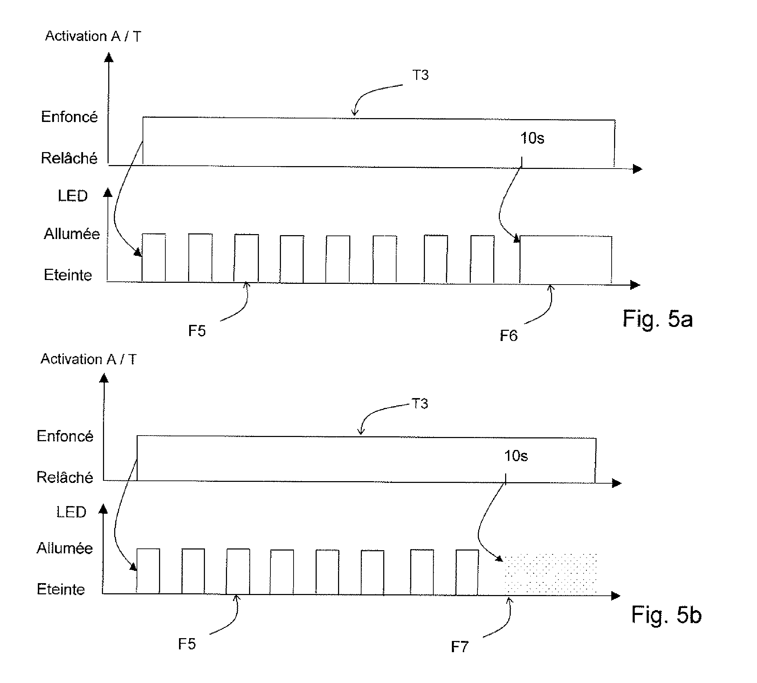

Les figures 5a et 5b illustrent la première option de ce deuxième mode de réalisation utilisé uniquement pour le retour d'information et ne dépendant pas de la manière dont est effectué le changement de protocole. On distingue également qu'on utilise dans ce mode de réalisation une requête d'information par touche de saisie, bien que cela ne soit pas limitatif. En effet, comme dans les modes de réalisation précédents, un seul protocole pourrait être commun à toutes les touches de saisie, auquel cas la mise en oeuvre est applicable à partir de l'activation de n'importe laquelle des touches de saisie.

Un appui sur une touche de saisie T3 entraîne comme illustré sur la figure 5a une mise en oeuvre de l'ordre associé à cette touche lorsque l'émetteur d'ordres est placé dans une installation comprenant un équipement domotique à commander. Dans tous les cas, un appui sur cette touche T3 entraîne l'émission d'un ordre, que celui-ci soit reçu ou non. Cet appui s'accompagne, dès le début de l'appui, d'un retour d'information visuel tel qu'un clignotement rapide F5 de la diode électroluminescente. Ce clignotement dure dans l'état de l'art pendant une période prédéterminée ou préférentiellement le temps d'appui de la touche de saisie.

Dans le deuxième mode de réalisation selon l'invention, si l'appui sur la touche de saisie se poursuit au-delà d'une période donnée par exemple de 10 secondes, le retour d'information visuel change à partir de ce moment et se poursuit, pendant une période prédéterminée ou jusqu'au relâchement de la touche.

Un premier format F6 de retour d'information, sous forme d'un allumage en continu de la diode électroluminescente, faisant suite au clignotement précédemment décrit est produit pour signifier qu'un premier protocole est actif. Lorsque la touche T3 est relâchée, la diode électroluminescente s'éteint (figure 5a).

Un deuxième format F7 de retour d'information, sous forme d'une absence de clignotement ou d'allumage de la diode électroluminescente, signifie qu'un deuxième protocole est actif (figure 5b). Avantageusement, ce deuxième protocole est un ancien protocole, ce format de retour d'information (F5+F7) correspondant au fonctionnement des anciens émetteurs. Il est donc uniquement nécessaire de prévoir un nouveau retour d'information pour les nouveaux émetteurs lorsque ceux-ci sont configurés avec un nouveau protocole.

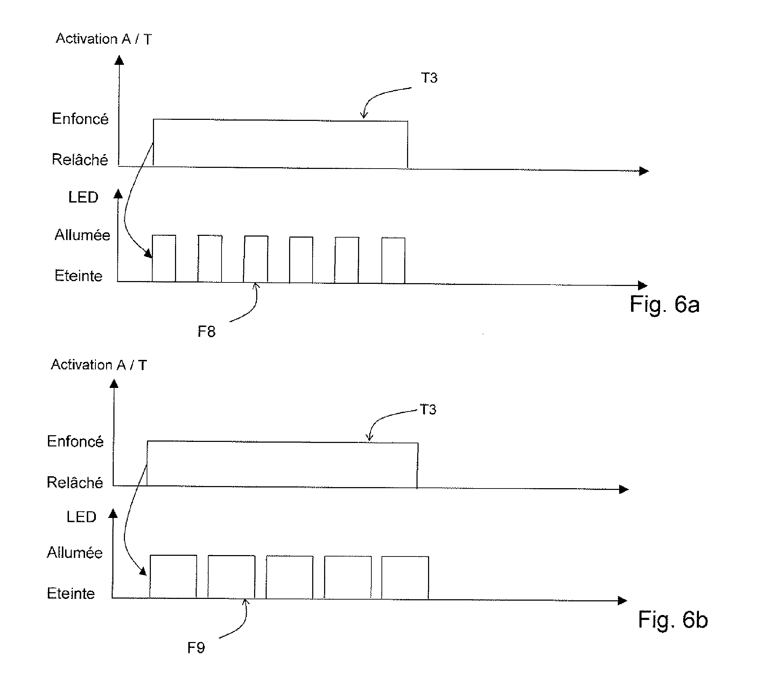

Les figures 6a et 6b illustrent la deuxième option de ce deuxième mode de réalisation.

Un appui sur une touche de saisie T3 entraîne comme illustré sur la figure 6a une mise en oeuvre de l'ordre associé à cette touche lorsque l'émetteur d'ordres est placé dans une installation comprenant un équipement domotique à commander. Dans tous les cas, un appui sur cette touche T3 entraîne l'émission d'un ordre, que celui-ci soit reçu ou non. Cet appui s'accompagne, dès le début de l'appui, d'un retour d'information visuel tel qu'un premier clignotement F8 de la diode électroluminescente dans le cas où un premier protocole est lié à la touche d'appui. Ce clignotement dure pendant une période prédéterminée ou préférentiellement le temps d'appui de la touche de saisie.

L'appui s'accompagne, dès le début de l'appui, d'un retour visuel sous forme d'un deuxième clignotement F9 plus lent de la diode électroluminescente dans le cas où un deuxième protocole est lié à la touche d'appui. Ce clignotement dure pendant une période prédéterminée ou préférentiellement le temps d'appui de la touche de saisie.

Avantageusement, le premier clignotement F8 dans ce mode de réalisation correspond au clignotement F1 mis en place sur les anciens émetteurs lorsque le premier protocole est un ancien protocole.

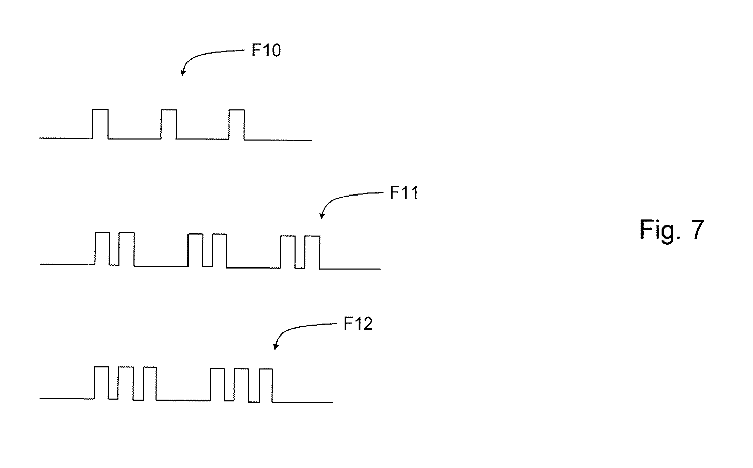

Alternativement, dans les différents modes de réalisation décrits, les formats de retour d'information donnent une indication sur un numéro d'ordre du protocole. Par exemple, le nombre de flashs rapprochés de la diode électroluminescente indique le numéro d'ordre du protocole actif. Différents formats F10, F11, F12 sont ainsi représentés en figure 7, pour indiquer un premier, deuxième ou troisième protocole.

Au lieu de ou de manière supplémentaire au clignotement de diode électroluminescente, le retour d'information pourrait être donné par des couleurs différentes produites par une ou plusieurs diodes.

## Revendications

1. Procédé de fonctionnement d'un émetteur d'ordres (1) destiné à commander un actionneur (21) de manoeuvre motorisée d'un écran domotique (22), un ordre étant émis sur requête d'un utilisateur par action sur une touche (T) de l'émetteur d'ordres associée à cet ordre et émis selon au moins un premier ou un deuxième protocole de communication suivant une configuration de cette touche, l'émetteur d'ordres comprenant un moyen de configuration de la touche, **caractérisé en ce qu'**un indicateur de l'émetteur d'ordres, distinct du moyen de configuration, indique la configuration de la touche de l'émetteur d'ordres selon le premier ou le deuxième protocole de communication.

2. Procédé de fonctionnement selon la revendication 1, **caractérisé en ce que** l'indication de configuration est réalisée sur requête de l'utilisateur.

3. Procédé de fonctionnement selon la revendication 2, **caractérisé en ce que** la requête de l'utilisateur permettant l'indication de configuration de la touche comprend un ou plusieurs appuis particuliers sur la touche.

4. Procédé de fonctionnement selon l'une des revendications précédentes, **caractérisé en ce qu'**un actionnement de la touche est utilisé dans une étape de modification du protocole de communication auquel la touche est associée.

5. Procédé de fonctionnement selon la revendication 4, **caractérisé en ce qu'**une étape de requête de l'utilisateur permettant l'indication de configuration et une étape de modification du protocole de communication auquel la touche est associée présente des phases communes.

6. Procédé de fonctionnement selon l'une des revendications précédentes, **caractérisé en ce qu'**il comprend une étape préalable de configuration d'au moins une touche de l'émetteur d'ordres selon le premier ou le deuxième protocole de communication.

7. Procédé de fonctionnement selon la revendication 6, **caractérisé en ce que** l'étape préalable de configuration est réalisée par actionnement d'un contact (A).

8. Procédé de fonctionnement selon la revendication 6, **caractérisé en ce que** l'étape préalable de configuration est réalisée par mise en place d'une pile (10) d'alimentation de l'émetteur d'ordres.

9. Procédé de fonctionnement selon l'une des revendications 7 ou 8, **caractérisé en ce que** l'au moins une touche est configurée selon le premier, respectivement le deuxième protocole de communication suite à un nombre pair, respectivement impair de mises en oeuvre de l'étape préalable de configuration.

10. Procédé de fonctionnement selon la revendication 6, **caractérisé en ce que** l'étape préalable de configuration est réalisée par une séquence d'appuis sur au moins l'une des touches de l'émetteur d'ordres lors d'une phase de programmation de l'émetteur d'ordres.

11. Procédé de fonctionnement selon l'une des revendications 6 à 10, **caractérisé en ce qu'**un actionnement de la touche est utilisé dans l'étape préalable de configuration de la touche.

12. Emetteur d'ordres (1) destiné à commander un actionneur (21) de manoeuvre motorisée d'un écran domotique (22), **caractérisé en ce qu'**il comprend des moyens matériels (4, A, T, 5, 7, 8) et logiciels pour mettre en oeuvre le procédé selon l'une des revendications précédentes.
